# DEMANDE DE BREVET EUROPEEN

(11) **EP 4 760 133 A1**
(43) Date de publication de la demande: **17.06.2026**
(21) Numéro de dépôt: 25222261.7
(22) Date de dépôt: 10.12.2025
(51) Int. Cl.: F16L 13/007, F16L 13/12, F16L 25/00, F16L 33/26, B60H 1/00

(54) **CONDUITE POUR UN CIRCUIT DE CLIMATISATION**

(30) Priorité: 10.12.2024 FR 2413780
(71) Demandeur: Hutchinson, 92110 Clichy (FR)
(72) Inventeur: LESTIENNE, Stéphane, 45110 Château Neuf sur Loire (FR); HOUSSIN, Alexandre, 45210 La Selle sur le Bied (FR); JAGO, Gille, 45200 Amilly (FR)
(74) Mandataire: Gevers & Orès

(57) **Abrégé**

L'invention concerne une conduite (1) pour un circuit de climatisation, en particulier pour un véhicule automobile, comprenant :
- un premier tuyau (2) présentant un axe longitudinal (X) et comprenant un conduit ondulé (6) comprenant un premier matériau métallique et une gaine externe (7, 8) agencée coaxialement autour du conduit ondulé (6),
- un second tuyau (3) comprenant un second matériau métallique différent du premier matériau métallique, et
- un connecteur (4) métallique reliant le second tuyau (3) au premier tuyau (2),
caractérisée en ce que le connecteur (4) comprend une première portion (10) tubulaire comprenant un matériau identique ou similaire au premier matériau et reliée par soudage au conduit ondulé (6), et une seconde portion (11) tubulaire comprenant un matériau identique ou similaire au second matériau et reliée par soudage au second tuyau (3).

## Description

### Domaine technique de l'invention

L'invention concerne le domaine technique des conduites pour les circuits de climatisation.

En particulier, l'invention concerne le domaine technique des conduites pour les circuits de climatisation de véhicules automobiles.

### Arrière-plan technique

Un véhicule automobile, par exemple, comprend typiquement un circuit de climatisation. Le circuit de climatisation comprend des conduites pour le transport d'un fluide réfrigérant.

Le fluide réfrigérant utilisé dans les circuits de climatisation est un gaz de la famille des hydrofluorooléfines (HFO) tel que le 2,3,3,3-tétrafluoropropène (1234yf). Ce type de gaz présente un impact environnemental qui peut être incompatible avec certaines règlementations nationales en matière d'environnement.

Afin de répondre à ces règlementations environnementales, il a été proposé de remplacer le 2,3,3,3-tétrafluoropropène par du gaz carbonique, connu sous la référence R744. En effet, il a été démontré qu'un tel gaz ne contient pas de substances per- et polyfluoroalkylées (PFAS) comparé au 2,3,3,3-tétrafluoropropène.

Le fonctionnement du circuit de climatisation contenant du gaz carbonique nécessite des pressions et des températures de fonctionnement supérieures à celles mises en œuvre pour le transport du 2,3,3,3-tétrafluoropropène. Les conduites du circuit de climatisation peuvent alors être soumises à des pressions internes supérieures à 100 bars et des températures supérieures à 150°C.

La configuration des conduites généralement utilisées dans les circuits de climatisation ne permettent pas forcément de résister à de telles conditions de pression et de température. Aussi, le gaz carbonique présente une composition chimique différente du 2,3,3,3-tétrafluoropropène et la configuration des conduites de transport de ce gaz n'est pas forcément compatible chimiquement avec le transport d'un gaz carbonique.

Dans ce cadre, le document FR-A1-2885398 propose une conduite pour le transport d'un fluide réfrigérant de type gaz carbonique, pour les circuits de climatisation. Selon ce document, la conduite comprend un premier tuyau flexible raccordé à un second tuyau rigide.

Le premier tuyau présente un axe longitudinal et comprend un conduit ondulé métallique et une gaine externe agencée coaxialement autour du conduit ondulé. Le conduit ondulé comprend un acier inoxydable.

Le second tuyau métallique s'étend le long de l'axe longitudinal et comprend un aluminium.

Selon ce document, les premier et second tuyaux sont reliés entre eux par un connecteur métallique. Le connecteur comprend selon ce document un acier inoxydable.

Pour relier le connecteur aux premier et second tuyaux, le connecteur est soudé à la fois au premier tuyau et au second tuyau. La soudure est par exemple une soudure par brasage ou par induction.

Bien que très efficace puisque permettant le transport d'un gaz carbonique aux conditions de pression et de température données, cette solution ne donne pas entièrement satisfaction.

En effet, le connecteur est soudé aux premier et second tuyaux. Or, la soudure du connecteur en acier inoxydable au second tuyau en aluminium présente de nombreux défis du fait de la différence de propriétés entre ceux deux matériaux.

Par conséquent, la fabrication d'une telle conduite est fastidieuse, longue et les propriétés mécaniques de la conduite à l'issue de l'étape de soudage ne sont pas forcément conformes aux attentes.

Dans ce cadre, il existe un besoin de fournir une conduite pour un circuit de climatisation qui soit compatible avec le transport d'un fluide réfrigérant aux conditions de pression et de température données, tout en étant facilement et rapidement réalisable.

### Résumé de l'invention

A cet effet, l'invention propose une conduite pour un circuit de climatisation, en particulier pour un véhicule automobile, comprenant :
- un premier tuyau présentant un axe longitudinal et comprenant un conduit ondulé comprenant un premier matériau métallique et une gaine externe agencée coaxialement autour du conduit ondulé,
- un second tuyau comprenant un second matériau métallique différent du premier matériau métallique, et
- un connecteur métallique reliant le second tuyau au premier tuyau.

La conduite selon l'invention est remarquable en ce que le connecteur comprend une première portion tubulaire comprenant un matériau identique ou similaire au premier matériau et reliée par soudage au conduit ondulé, et une seconde portion tubulaire comprenant un matériau identique ou similaire au second matériau et reliée par soudage au second tuyau.

Grâce au connecteur selon l'invention, en particulier grâce à son caractère bi-métallique, il est désormais possible de relier de façon simple et fiable le connecteur à la fois au premier tuyau et au second tuyau.

En effet, la première portion du connecteur présente un matériau identique ou similaire au matériau du conduit ondulé et la seconde portion du connecteur présente un matériau identique ou similaire au second tuyau. Par « matériau identique », il est entendu que les compositions des deux matériaux sont les mêmes.

Par « matériau similaire », il est entendu que les compositions des deux matériaux peuvent différer, mais que le composé métallique majoritairement présent dans la composition est identique dans les deux compositions.

Ainsi, deux compositions à base d'aluminium mais dont les composés supplémentaires diffèrent, sont considérées au sens de la présente invention comme des matériaux similaires. Deux compositions à base d'aluminium et donc les composés supplémentaires sont identiques, sont considérées au sens de la présente invention comme des matériaux identiques.

Grâce à une telle configuration, il est possible de s'affranchir des inconvénients liés à l'assemblage de pièces de matériaux distincts et donc de relier chacune de ces portions à chacun des tuyaux par l'intermédiaire d'une soudure classique.

La résistance mécanique du connecteur, et donc de la conduite, est ainsi largement améliorée.

Le connecteur selon l'invention résiste alors à des pressions internes pouvant aller jusqu'à 170 bars et à des températures pouvant aller jusqu'à 180°C. Il présente également une résistance en éclatement de 340 bars. Aussi, le procédé de fabrication d'une telle conduite est largement facilité.

L'invention peut comprendre une ou plusieurs des caractéristiques suivantes, prises isolément les unes des autres ou en combinaison les unes avec les autres :
- le premier matériau comprend un acier inoxydable,
- le second matériau est à base d'aluminium,
- la première portion est reliée à une extrémité longitudinale du conduit ondulé,
- la première portion présente une première extrémité longitudinale reliée à l'extrémité longitudinale du conduit ondulé,
- les première et seconde portions sont reliées entre elles par soudage ou frettage ou vissage,
- le second tuyau présente une extrémité longitudinale située à l'intérieur de la seconde portion.

L'invention concerne également un procédé de fabrication d'une conduite selon l'une quelconque des caractéristiques précédentes, caractérisé en ce que le procédé comprend les étapes chronologiques suivantes :
(a) fournir les première et seconde portions,
(b) souder la première portion au conduit ondulé, et
(c) souder la seconde portion au second tuyau.

L'invention peut comprendre une ou plusieurs des caractéristiques suivantes, prises isolément les unes des autres ou en combinaison les unes avec les autres :
- entre l'étape (a) et (b), le procédé comprend l'étape (a') suivante :
   (a2) souder les première et seconde portions entre elles,
- après l'étape (c), le procédé comprend l'étape (d) suivante :
   (d) assembler les première et seconde portions entre elles par frettage ou par vissage.

L'invention concerne également une conduite pour un circuit de climatisation, en particulier pour un véhicule automobile, comprenant :
- un premier tuyau présentant un axe longitudinal et comprenant un conduit ondulé comprenant un premier matériau métallique et une gaine externe agencée coaxialement autour du conduit ondulé,
- un second tuyau comprenant un second matériau métallique différent du premier matériau métallique, et
- un connecteur métallique reliant le second tuyau au premier tuyau, le second tuyau étant inséré de coaxialement dans le connecteur et soudé au connecteur, caractérisée en ce que le connecteur est soudé au second tuyau par une soudure laser.

La soudure laser permet de chauffer rapidement l'interface de liaison entre le connecteur et le second tuyau. La rapidité de la montée en température offerte par une telle soudure permet de réaliser une soudure entre le connecteur en acier inoxydable notamment et le second tuyau en aluminium notamment exempte de phase intermétallique. Ceci assure une cohésion optimale de l'ensemble et donc une liaison étanche entre le connecteur et le second tuyau.

L'invention peut comprendre une ou plusieurs des caractéristiques suivantes, prises isolément les unes des autres ou en combinaison les unes avec les autres :
- le second tuyau est emmanché en force dans le connecteur,
- le second matériau est à base d'aluminium,
- le connecteur comprend une extrémité longitudinale qui est reliée au second tuyau par la soudure laser,
- le connecteur comprend un corps tubulaire ou cylindrique centré sur l'axe longitudinal et s'étendant entre des première et seconde extrémités longitudinales, la première extrémité longitudinale est reliée au second tuyau par la soudure laser et la seconde extrémité longitudinale est reliée au premier tuyau,
- le corps tubulaire présente un diamètre externe inférieur au diamètre externe des première et seconde extrémités longitudinales,
- la seconde extrémité longitudinale est reliée au premier tuyau par une soudure orbitale,
- le connecteur comprend un acier inoxydable.

L'emmanchement en force du second tuyau dans le connecteur permet une reprise mécanique des efforts s'exerçant sur la conduite.

L'invention concerne également un procédé de fabrication d'une conduite selon l'une quelconque des caractéristiques précédentes, caractérisé en ce que le procédé comprend les étapes chronologiques suivantes :
(a) insérer le second tuyau dans le connecteur, et
(b) souder le connecteur au second tuyau par une soudure laser.

L'invention peut comprendre une ou plusieurs des caractéristiques suivantes, prises isolément les unes des autres ou en combinaison les unes avec les autres :
- lors de l'étape (a), le second tuyau est inséré dans le connecteur par un emmanchement en force,
- une étape (c) de soudure du premier tuyau au connecteur.

### Brève description des figures

D'autres caractéristiques et avantages ressortiront de la description qui suit de modes de réalisation non limitatifs de l'invention en référence aux dessins annexés sur lesquels :
la figure 1 est une vue en coupe longitudinale d'une conduite selon un premier mode de réalisation de l'invention,
la figure 2 est une vue en coupe longitudinale d'une conduite selon un autre mode de réalisation de l'invention,
la figure 3 est une vue en coupe longitudinale d'une conduite selon un autre mode de réalisation,
la figure 4 est une vue en coupe longitudinale d'une conduite selon un autre mode de réalisation,
la figure 5 est un schéma synoptique d'un procédé de fabrication d'une conduite selon l'invention,
la figure 6 est une vue en coupe longitudinale d'une conduite selon un mode de réalisation de l'invention.

### Description détaillée de l'invention

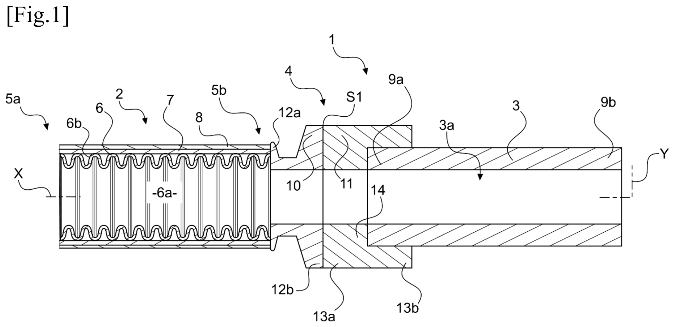

Les figures 1 à 4 représentent une conduite 1 selon différents modes de réalisation de l'invention. La conduite 1 présente un axe longitudinal X.

Dans la présente invention, les termes « intérieur », « interne », « extérieur », « externe », s'entendent par rapport à un axe transversal Y perpendiculaire à l'axe longitudinal X, et par rapport à l'éloignement de l'axe longitudinal X le long de cet axe transversal Y. Les termes « extérieur » et « externe » s'entendent comme relativement plus éloigné de l'axe longitudinal X le long de l'axe transversal Y, tandis que les termes « interne », « intérieur » s'entendent comme relativement plus proche de l'axe longitudinal X le long de l'axe transversal Y.

La conduite 1 est destinée au transport d'un fluide réfrigérant. Le fluide est par exemple un gaz. Le gaz comprend par exemple un gaz carbonique, également connu sous la référence R744.

Le fluide transporté est par exemple à une pression comprise entre 50 bars et 180 bars et à une température comprise entre 50°C et 200°C.

La conduite 1 comprend un premier tuyau 2, un second tuyau 3 et un connecteur 4 reliant les premier et second tuyaux 2, 3 entre eux.

Le premier tuyau 2 s'étend autour et le long de l'axe longitudinal X. Le premier tuyau 2 s'étend longitudinalement entre une première extrémité 5a et une seconde extrémité 5b opposée. Les première et seconde extrémités 5a, 5b sont annulaires et centrées sur l'axe longitudinal X.

Le premier tuyau 2 est de type multicouches. Le premier tuyau 2 est flexible. Il comprend, de l'intérieur vers l'extérieur, un conduit ondulé 6, une première gaine externe 7 située coaxialement autour du conduit ondulé 6 et optionnellement une seconde gaine externe 8 située autour de la première gaine externe 7.

Le conduit ondulé 6 s'étend longitudinalement entre les première et seconde extrémités 5a, 5b du premier tuyau 2. Le conduit ondulé 6a présente un passage interne 6a de circulation du fluide réfrigérant qui s'étend longitudinalement entre les première et seconde extrémités 5a, 5b du premier tuyau 2.

Le conduit ondulé 6 présente des ondulations 6b sur sa surface externe qui s'étendent de préférence entre les première et seconde extrémités du premier tuyau 2.

Le conduit ondulé 6 comprend un premier matériau métallique. Le premier matériau métallique est un acier inoxydable.

La première gaine externe 7 s'étend avantageusement longitudinalement entre les première et seconde extrémités 5a, 5b du premier tuyau 2. La première gaine externe 7 recouvre ainsi le conduit ondulé 6.

La première gaine 7 comprend un matériau métallique. Le matériau métallique est par exemple choisi parmi les aciers inoxydables.

La première gaine 7 présente une épaisseur par exemple comprise entre 0,1 mm et 0,5 mm.

La première gaine 7 comprend de manière avantageuse une tresse de fils métalliques.

La seconde gaine 8 est la couche la plus externe du premier tuyau 2. Elle recouvre la première gaine 7. La seconde gaine 8 s'étend avantageusement longitudinalement entre les première et seconde extrémités 5a, 5b du premier tuyau 2.

La seconde gaine 8 comprend un matériau métallique. Le matériau métallique est par exemple choisi parmi les aciers inoxydables.

La seconde gaine 8 présente une épaisseur par exemple comprise entre 0,1 mm et 0,5 mm.

La seconde gaine 8 comprend de manière avantageuse une tresse de fils métalliques.

Le premier tuyau 2 peut comprendre en outre une troisième gaine 8' agencée autour de la seconde gaine 8. La troisième gaine 8' comprend par exemple un matériau métallique, tel qu'un acier inoxydable.

Le premier tuyau 2 peut comprendre en outre une quatrième gaine située autour de la troisième gaine 8'. La quatrième gaine comprend par exemple un matériau polymère, tel qu'un thermoplastique.

Le second tuyau 3 est rigide. Le second tuyau 3 s'étend autour et le long de l'axe longitudinal X. Le second tuyau 3 est aligné axialement avec le premier tuyau 2. Le second tuyau 3 s'étend longitudinalement entre une première extrémité 9a et une seconde extrémité 9b opposée. Les première et seconde extrémités 9a, 9b sont annulaires et centrées sur l'axe longitudinal X.

Le second tuyau 3 comprend un second matériau métallique. Le second matériau métallique est différent du premier matériau métallique du conduit ondulé 6. Le second matériau métallique est de manière préférée à base d'aluminium, et est en particulier un aluminium ou un alliage d'aluminium. Le second tuyau 3 présente un diamètre interne sensiblement égal à un diamètre interne du conduit ondulé 6.

Le second tuyau 3 présente un passage interne 3a de circulation du fluide réfrigérant qui s'étend longitudinalement entre les première et seconde extrémités 9a, 9b du second tuyau 3.

Les premier et second tuyaux 2, 3 sont reliés entre eux par le connecteur 4. Le connecteur 4 s'étend le long et autour de l'axe longitudinal X. Il est situé axialement entre les premier et second tuyaux 2, 3.

Le connecteur 4 présente un passage interne 4a de circulation du fluide réfrigérant. Ce passage interne 4a relie fluidiquement les passages internes 6a, 3a des premier et second tuyaux 2, 3. Les passages internes 6a, 4a, 3a sont annulaires et centrés sur l'axe longitudinal X. Ils sont ainsi alignés le long de l'axe longitudinal X.

Selon l'invention, le connecteur 4 est bi métallique. Le connecteur 4 comprend ainsi une première portion 10 comprenant un matériau métallique et une seconde portion 11 comprenant un autre matériau métallique différent du matériau métallique de la première portion 10.

Le matériau métallique de la première portion 10 est identique ou similaire au premier matériau métallique du conduit ondulé 6. Le matériau métallique de la première portion 10 comprend ainsi de préférence un acier inoxydable. Par « matériau identique », il est entendu que les compositions des deux matériaux sont les mêmes.

Par « matériau similaire », il est entendu que les compositions des deux matériaux peuvent différer, mais que le composé métallique majoritairement présent dans la composition est identique dans les deux compositions. Ainsi, deux aciers sont considérés au sens de la présente invention comme des matériaux similaires lorsque le taux des éléments d'addition diffère entre les deux aciers. Deux aciers sont considérés au sens de la présente invention comme des matériaux identique lorsque la composition des deux aciers est la même.

La première portion 10 s'étend selon l'axe longitudinal X entre une première extrémité 12a et une seconde extrémité 12b opposée. Les première et seconde extrémités 12a, 12b sont annulaires et centrées sur l'axe longitudinal X.

La première portion 10 est reliée au premier tuyau 2. Selon l'invention, la première portion 10 est fixée par soudure au conduit ondulé 6. En particulier, la première extrémité 12a de la première portion 10 du connecteur 4 est soudée à la seconde extrémité 5b du premier tuyau 2.

La soudure est annulaire. Elle est par exemple une soudure laser ou une soudure à l'arc connue sous l'acronyme anglais TIG.

Le matériau métallique de la seconde portion 11 est identique ou similaire au second matériau métallique du second tuyau 3. Le matériau métallique de la seconde portion 11 comprend ainsi de préférence un matériau à base d'aluminium, tel qu'un aluminium ou un alliage d'aluminium.

Par « matériau identique », il est entendu que les compositions des deux matériaux sont les mêmes.

Par « matériau similaire », il est entendu que les compositions des deux matériaux peuvent différer, mais que le composé métallique majoritairement présent dans la composition est identique dans les deux compositions. Ainsi, deux compositions à base d'aluminium mais dont les composés supplémentaires diffèrent, sont considérées au sens de la présente invention comme des matériaux similaires. Deux compositions à base d'aluminium et donc les composés supplémentaires sont identiques, sont considérées au sens de la présente invention comme des matériaux identiques.

La seconde portion 11 s'étend selon l'axe longitudinal X entre une première extrémité 13a et une seconde extrémité 13b opposée. Les première et seconde extrémités 13a, 13b sont annulaires et centrées sur l'axe longitudinal X.

La seconde portion 11 peut comprendre un épaulement interne 14 annulaire. La seconde portion 11 est reliée au second tuyau 3. Selon l'invention, la seconde portion 11 est fixée par soudure au second tuyau 3. En particulier, la seconde extrémité 13b de la seconde portion 11 du connecteur 4 est soudée au second tuyau 3.

La soudure est annulaire. Elle est par exemple une soudure laser ou un brasage.

De préférence, le second tuyau 3 est inséré dans la seconde portion 11 du connecteur 4. Par exemple, la première extrémité 9a du second tuyau 3 est en butée contre l'épaulement interne 14 de la seconde portion 11 du connecteur 4.

Les première et seconde portions 10, 11 du connecteur 4 sont reliées entre elles.

Grâce au connecteur 4 selon l'invention, en particulier grâce à son caractère bi-métallique, il est désormais possible de relier de façon simple et fiable le connecteur 4 à la fois au premier tuyau 2 et au second tuyau 3. En effet, la première portion 10 du connecteur 4 présente un matériau métallique identique ou similaire au matériau métallique du conduit ondulé 6 et la seconde portion 11 du connecteur 4 présente un matériau métallique identique ou similaire au matériau métallique du second tuyau 3.

Grâce à une telle configuration, il est possible de s'affranchir des inconvénients liés à l'assemblage de pièces de matériaux différents et donc de relier chacune de ces portions 10, 11 à chacun des tuyaux 2, 3 par une soudure classique. La résistance mécanique du connecteur 4 et donc de la conduite 1 est largement améliorée.

Le connecteur 4 selon l'invention résiste alors à des pressions internes pouvant aller jusqu'à 170 bars et à des températures pouvant aller jusqu'à 180°C. Il présente également une résistance en éclatement de 340 bars. En outre, les première et seconde portions 10, 11 peuvent être reliées entre elles simplement par des procédés adaptés.

Plusieurs modes de réalisation du connecteur 4 vont maintenant être décrits. Selon un premier mode de réalisation illustré sur la figure 1, les première et seconde portions 10, 11 du connecteur 4 sont reliées entre elles par une soudure S1 annulaire. En particulier, la seconde extrémité 12b de la première portion 10 est reliée par la soudure S1 à la première extrémité 13a de la seconde portion 11. Selon ce mode de réalisation, la seconde extrémité 12b de la première portion 10 présente un diamètre externe identique au diamètre externe de la première extrémité 13a de la seconde portion 11. La soudure S1 est de manière préférée une soudure par diffusion. La soudure par diffusion est par exemple réalisée par un procédé de soudure par explosion ou un procédé de co-laminage à chaud.

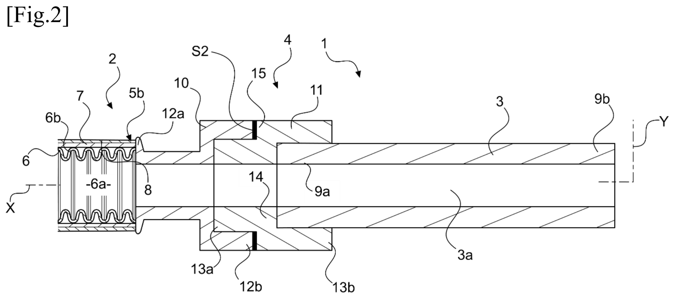

Selon un second mode de réalisation illustré sur la figure 2, les première et seconde portions 10, 11 du connecteur 4 sont reliées entre elles par une soudure S2 annulaire.

La soudure S2 est par exemple une soudure par friction.

En particulier, la seconde extrémité 12b de la première portion 10 peut être reliée par la soudure S2 à un épaulement externe 15 annulaire de la seconde portion 11. L'épaulement annulaire externe 15 est située entre la première extrémité 13a et la seconde extrémité 13b de la seconde portion 11 du connecteur 4. Selon ce mode de réalisation, de manière préférée, le diamètre externe de l'épaulement externe 15 est égal au diamètre externe de la seconde extrémité 12b de la première portion 10.

De manière avantageuse, selon ce second mode de réalisation, la première extrémité 13a de la seconde portion 11 est insérée dans la première portion 10 du connecteur 4. De manière préférée, le diamètre externe de la seconde extrémité 12b de la première portion 10 est supérieur au diamètre externe de la première extrémité 12a de la première portion 10.

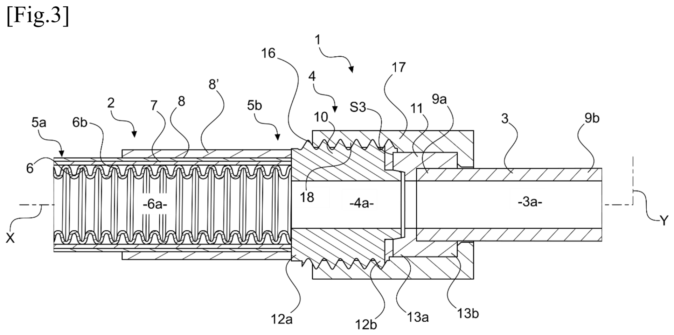

Selon un troisième mode de réalisation illustré sur la figure 3, les première et seconde portions 10, 11 du connecteur 4 sont reliées entre elles par vissage et optionnellement par soudage.

Selon ce troisième mode de réalisation, les première et seconde portions 10, 11 sont soudées entre elles. Le connecteur 4 comprend ainsi une soudure S3 annulaire formée entre les première et seconde portions 10, 11.

Selon ce troisième mode de réalisation, la première portion 10 du connecteur 4 comprend de manière préférée un filetage externe 16. Elle comprend ainsi des nervures externes hélicoïdales. Elles sont formées sur une surface externe de la première portion 10. Le diamètre externe du filetage externe 16 est de préférence égale au diamètre externe de la soudure S3.

Selon ce troisième mode de réalisation, le connecteur 4 comprend en outre un écrou 17 monté coaxialement autour des première et seconde portions 10, 11. L'écrou 17 permet de solidariser les première et seconde portions 10, 11 entre elles.

L'écrou 17 est annulaire et centré sur l'axe longitudinal X. Il comprend un filetage interne 18 qui coopère avec le filetage externe 16 de la première portion 10.

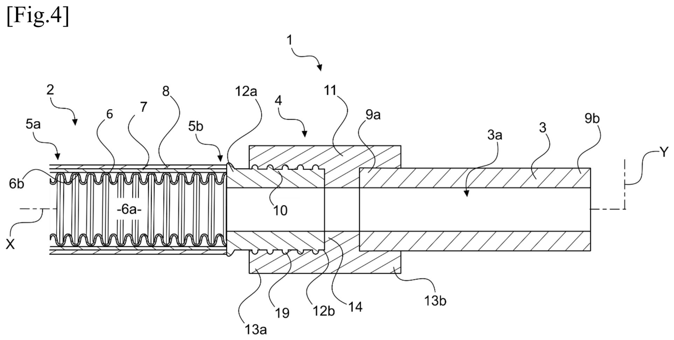

Selon un quatrième mode de réalisation illustré sur la figure 4, les première et seconde portions 10, 11 sont assemblées entre elles par frettage.

Selon ce mode de réalisation, la première portion 10 comprend des nervures externes 19. Les nervures externes 19 sont formées sur la surface externe de la première portion 10. Les nervures externes 19 sont par exemple hélicoïdales.

Selon ce quatrième mode de réalisation, la première portion 10 du connecteur 4 est insérée dans la seconde portion 11 du connecteur 4. Les nervures externes 19 coopèrent ainsi avec une surface interne de la seconde portion 11.

Selon ce quatrième mode de réalisation, avantageusement, la seconde extrémité 12b de la première portion 10 du connecteur 4 est en butée contre l'épaulement interne14 de la seconde portion 11.

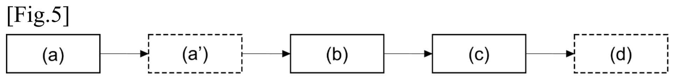

Un procédé de fabrication de la conduite 1 selon l'invention va maintenant être décrit en référence à la figure 5.

Le procédé de fabrication comprend les étapes suivantes :
(a) fournir les première et seconde portions 10, 11 du connecteur 4,
(b) souder la première portion 10 au conduit ondulé 6,
(c) souder la seconde portion 11 au second tuyau 3.

Les étapes (b) et (c) peuvent être réalisées par un procédé de soudure laser ou de brasage.

Selon un premier mode de réalisation, le procédé peut comprendre l'étape (a') suivante réalisée entre les étapes (a) et (b) :
(a') souder les première et seconde portions 10, 11 entre elles.

A l'étape (a'), la soudure peut être réalisée par un procédé de soudure par explosion ou un procédé de co-laminage à chaud ou un procédé de soudure par friction.

Selon un mode de réalisation, après les étapes (b) et (c) de soudure des première et seconde portions 10, 11 respectivement aux premier et second tuyaux 2, 3, le procédé peut comprendre une étape (d) d'assemblage des première et seconde portions 10, 11 entre elles.

Selon un exemple, l'assemblage des première et seconde portions 10, 11 peut être réalisé par vissage. Selon cet exemple, l'écrou 17 est monté autour des première et seconde portions 10, 11.

Selon un autre exemple, l'assemblage des première et seconde portions 10, 11 est réalisé par frettage. Selon cet exemple, le procédé ne comprend pas l'étape (a').

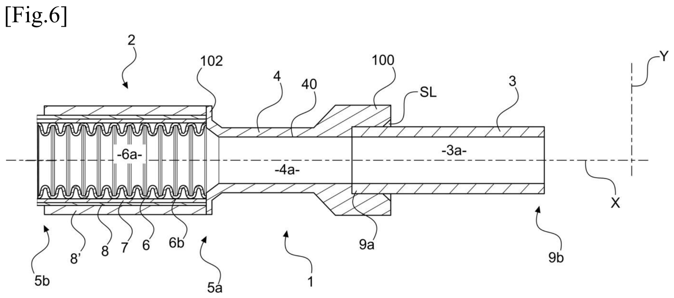

La figure 6 représente une conduite 1 selon un autre mode de réalisation de l'invention. La conduite 1 présente un axe longitudinal X.

Dans la présente invention, les termes « intérieur », « interne », « extérieur », « externe », s'entendent par rapport à un axe transversal Y perpendiculaire à l'axe longitudinal X, et par rapport à l'éloignement de l'axe longitudinal X le long de cet axe transversal Y. Les termes « extérieur » et « externe » s'entendent comme relativement plus éloigné de l'axe longitudinal X le long de l'axe transversal Y, tandis que les termes « interne », « intérieur » s'entendent comme relativement plus proche de l'axe longitudinal X le long de l'axe transversal Y.

La conduite 1 est destinée au transport d'un fluide réfrigérant. Le fluide est par exemple un gaz. Le gaz comprend par exemple un gaz carbonique, également connu sous la référence R744.

Le fluide transporté est par exemple à une pression comprise entre 50 bars et 180 bars et à une température comprise entre 50°C et 200°C.

La conduite 1 comprend un premier tuyau 2, un second tuyau 3 et un connecteur 4 reliant les premier et second tuyaux 2, 3 entre eux.

Le premier tuyau 2 s'étend autour et le long de l'axe longitudinal X. Le premier tuyau 2 s'étend longitudinalement entre une première extrémité 5a et une seconde extrémité 5b opposée. Les première et seconde extrémités 5a, 5b sont annulaires et centrées sur l'axe longitudinal X.

Le premier tuyau 2 est de type multicouches. Le premier tuyau 2 est flexible. Il comprend, de l'intérieur vers l'extérieur, un conduit ondulé 6, une première gaine externe 7 située coaxialement autour du conduit ondulé 6 et optionnellement une seconde gaine externe 8 située autour de la première gaine externe 7.

Le conduit ondulé 6 s'étend longitudinalement entre les première et seconde extrémités 5a, 5b du premier tuyau 2. Le conduit ondulé 6a présente un passage interne 6a de circulation du fluide réfrigérant qui s'étend longitudinalement entre les première et seconde extrémités 5a, 5b du premier tuyau 2.

Le conduit ondulé 6 présente des ondulations 6b sur sa surface externe qui s'étendent de préférence entre les première et seconde extrémités du premier tuyau 2.

Le conduit ondulé 6 comprend un premier matériau métallique. Le premier matériau métallique est un acier inoxydable.

La première gaine externe 7 s'étend avantageusement longitudinalement entre les première et seconde extrémités 5a, 5b du premier tuyau 2. La première gaine externe 7 recouvre ainsi le conduit ondulé 6.

La première gaine 7 comprend un matériau métallique. Le matériau métallique est par exemple choisi parmi les aciers inoxydables.

La première gaine 7 présente une épaisseur par exemple comprise entre 0,1 mm et 0,5 mm.

La première gaine 7 comprend de manière avantageuse une tresse de fils métalliques.

La seconde gaine 8 est la couche la plus externe du premier tuyau 2. Elle recouvre la première gaine 7. La seconde gaine 8 s'étend avantageusement longitudinalement entre les première et seconde extrémités 5a, 5b du premier tuyau 2.

La seconde gaine 8 comprend un matériau métallique. Le matériau métallique est par exemple choisi parmi les aciers inoxydables.

La seconde gaine 8 présente une épaisseur par exemple comprise entre 0,1 mm et 0,5 mm.

La seconde gaine 8 comprend de manière avantageuse une tresse de fils métalliques.

Le premier tuyau 2 peut comprendre en outre une troisième gaine 8' agencée autour de la seconde gaine 8. La troisième gaine 8' comprend par exemple un matériau métallique, tel qu'un acier inoxydable.

Le premier tuyau 2 peut comprendre en outre une quatrième gaine située autour de la troisième gaine 8'. La quatrième gaine comprend par exemple un matériau polymère, tel qu'un thermoplastique.

Le second tuyau 3 est rigide. Le second tuyau 3 s'étend autour et le long de l'axe longitudinal X. Le second tuyau 3 s'étend longitudinalement entre une première extrémité 9a et une seconde extrémité 9b opposée. Les première et seconde extrémités 9a, 9b sont annulaires et centrées sur l'axe longitudinal X.

Le second tuyau 3 comprend un second matériau métallique. Le second matériau métallique est différent du premier matériau métallique du conduit ondulé 6. Le second matériau métallique est de manière préférée à base d'aluminium, et est en particulier un aluminium ou un alliage d'aluminium. Le second tuyau 3 présente un diamètre interne sensiblement égal à un diamètre interne du conduit ondulé 6.

Le second tuyau 3 présente un passage interne 3a de circulation du fluide réfrigérant qui s'étend longitudinalement entre les première et seconde extrémités 9a, 9b du second tuyau 3.

Les premier et second tuyaux 2, 3 sont reliés entre eux par le connecteur 4. Le connecteur 4 s'étend le long et autour de l'axe longitudinal X.

Le connecteur 4 présente un passage interne 4a de circulation du fluide réfrigérant. Ce passage interne 4a relie fluidiquement les passages internes 6a, 3a des premier et second tuyaux 2, 3. Les passages internes 6a, 4a, 3a sont annulaires et centrés sur l'axe longitudinal X. Ils sont ainsi alignés le long de l'axe longitudinal X.

Le connecteur 4 comprend un matériau métallique, notamment un acier inoxydable.

Le connecteur 4 s'étend longitudinalement entre une première extrémité 100 et une seconde extrémité 102 longitudinalement opposée. Les première et seconde extrémités 100, 102 sont annulaires et centrées sur l'axe longitudinal X.

Le connecteur 4 présente un corps cylindrique ou tubulaire 40 reliant axialement les première et seconde extrémités 100, 102 entre elles. Le corps 40 s'étend longitudinalement entre les première et seconde extrémités 100, 102.

Selon l'exemple de la figure 6, le corps 40 présente un diamètre externe inférieur au diamètre externe des première et seconde extrémités 100, 102.

Le connecteur 4 est relié au premier tuyau 2, de façon préférée par une soudure. De façon préférée, la seconde extrémité 102 du connecteur 4 est reliée à la première extrémité 5a du premier tuyau 2, par la soudure. La soudure est circulaire.

La seconde extrémité 9b du second tuyau 3 est située à l'intérieur du connecteur 4 de façon coaxiale.

Le second tuyau 3 est de façon préférée emmanché en force dans le connecteur 4.

En outre, le second tuyau 3 est relié au connecteur 4 par une soudure laser SL. La soudure laser SL est circulaire. De façon préférée, la première extrémité 100 du connecteur 4 est reliée au second tuyau 3 par la soudure laser SL.

Un procédé de fabrication de cette conduite 1 va maintenant être décrit. Le procédé comprend les étapes suivantes :
(a) insérer le second tuyau 3 dans le connecteur 4,
(b) souder le connecteur 4 au second tuyau 3 par une soudure laser SL ?
(c) souder le premier tuyau 2 au connecteur 4.

Lors de l'étape (a), le second tuyau 3 est inséré dans le connecteur 4 par un emmanchement en force.

L'étape (c) peut être réalisé avant l'étape (a) ou après les étapes (a) et/ou (b).

## Revendications

1. Conduite (1) pour un circuit de climatisation, en particulier pour un véhicule automobile, comprenant :
- un premier tuyau (2) présentant un axe longitudinal (X) et comprenant un conduit ondulé (6) comprenant un premier matériau métallique et une gaine externe (7, 8) agencée coaxialement autour du conduit ondulé (6),
- un second tuyau (3) comprenant un second matériau métallique différent du premier matériau métallique, et
- un connecteur (4) métallique reliant le second tuyau (3) au premier tuyau (2),
**caractérisée en ce que** le connecteur (4) comprend une première portion (10) tubulaire comprenant un matériau identique ou similaire au premier matériau et reliée par soudage au conduit ondulé (6), et une seconde portion (11) tubulaire comprenant un matériau identique ou similaire au second matériau et reliée par soudage au second tuyau (3),
les première et seconde portions (10, 11) sont reliées entre elles par soudage ou frettage ou vissage.

2. Conduite selon la revendication précédente, **caractérisée en ce que** le premier matériau comprend un acier inoxydable.

3. Conduite selon l'une quelconque des revendications précédentes, **caractérisée en ce que** le second matériau est à base d'aluminium.

4. Conduite selon l'une quelconque des revendications précédentes, **caractérisée en ce que** la première portion (10) est reliée à une extrémité longitudinale (5a) du conduit ondulé (6).

5. Conduite selon la revendication précédente, **caractérisée en ce que** la première portion (10) présente une première extrémité longitudinale (12a) reliée à l'extrémité longitudinale (5a) du conduit ondulé (6).

6. Conduite selon l'une quelconque des revendications précédentes, **caractérisée en ce que** le second tuyau (3) présente une extrémité longitudinale (9a) située à l'intérieur de la seconde portion (11).

7. Procédé de fabrication d'une conduite selon l'une quelconque des revendications précédentes, **caractérisé en ce que** le procédé comprend les étapes chronologiques suivantes :
(a) fournir les première et seconde portions (10, 11),
(b) souder la première portion (10) au conduit ondulé (6), et
(c) souder la seconde portion (11) au second tuyau (3),
les première et seconde portions (10, 11) sont reliées entre elles par soudage ou frettage ou vissage.

8. Procédé selon la revendication précédente, **caractérisé en ce que** entre l'étape (a) et (b), le procédé comprend l'étape (a') suivante :
(a2) souder les première et seconde portions (10, 11) entre elles.

9. Procédé selon les revendications 7 ou 8, **caractérisé en ce que** après l'étape (c), le procédé comprend l'étape (d) suivante :
(d) assembler les première et seconde portions (10, 11) entre elles par frettage ou par vissage.
